# EUROPEAN PATENT APPLICATION

(11) **EP 2 565 769 A2**
(43) Date of publication of application: **06.03.2013**
(21) Application number: 12182214.2
(22) Date of filing: 29.08.2012
(51) Int. Cl.: G06F 3/0488, G06F 3/0481

(54) **Apparatus and method for changing an icon in a portable terminal**

(30) Priority: 30.08.2011 KR 20110087076
(71) Applicant: Samsung Electronics Co., Ltd., Suwon-si, Gyeonggi-do, 443-742 (KR)
(72) Inventor: Ban, Ji-Hye, 443-742 Gyeonggi-do (KR)
(74) Representative: Hutter, Jacobus Johannes

(57) **Abstract**

An apparatus and method change an icon in a portable terminal. The apparatus for performing an icon edit process in the portable terminal includes an input unit, a gesture analysis unit, a controller, and an edit-mode performance unit. The input unit receives an input of a gesture by a user. After sensing and analyzing the gesture input through the input unit, the gesture analysis unit identifies if the gesture is an edit gesture made on an icon. If the gesture is not the edit gesture made on the icon, the controller performs an operation for the gesture. If the gesture is the edit gesture made on the icon, the edit-mode performance unit performs an edit mode.

## Description

### BACKGROUND OF THE INVENTION

### 1. Field of the Invention

The present invention relates to an apparatus and method for editing an icon of a pre-installed application in a portable terminal.

### 2. Description of the Related Art

In recent years, portable terminals, a necessity to modern people, have become widely used. A service provider or a system manufacturer in the field of portable terminals typically competitively develops a product or a service for differentiating them from other enterprises.

For example, portable terminals have evolved into multimedia equipment for phone books, games, short messages, electronic mail (e-mail) messages, morning wakeup calls, MPEG-1 Audio Layer 3 (MP3) players, schedule management functions, digital cameras, multimedia messages and wireless Internet services, and provide a variety of services.

Further, the above functions may be connected with launcher icons, and the portable terminal can additionally install an application downloaded by a user. Accordingly, the user of the portable terminal launches the installed applications through touches of the launcher icons corresponding to the applications.

Generally, the portable terminal outputs launcher icons of pre-installed applications. As the portable terminal may have a large capacity of memory, it may be possible to install a plurality of applications. This has led to an increase in the number of launcher icons to be output on a display of the portable terminal.

However, the portable terminal typically has its display or other associated output device include a small screen with a limited viewing area due to the restrictive dimensions required for portability of the portable terminal, so with such a restricted or limited size of the display or output device, it may be necessary for the portable terminal to output the launcher icons through many pages on the display.

That is, the portable terminal limits the number of launcher icons displayable per page and, when the limited number of launcher icons is exceeded, continuously outputs the launcher icons to a next page.

Due to this, according to the preferences of a user of the portable terminal, the user may initiate or execute processes to change a position of an icon, to form a group of associated icons to reduce the number of pages, or to reduce the number of output icons. Further, the user can touch an output or displayed icon to delete an application associated with the icon.

Generally, to group or delete pre-installed or pre-output launcher icons, the user of the portable terminal must manually perform a process of selecting an edit item after pressing a key, which may be a hardware key of the portable terminal, or may be another symbol or icon on the screen of the portable terminal.

For example, to group the launcher icons, the user of the portable terminal selects a menu key and enters an edit mode. After that, the user must manually perform a process of creating a folder for grouping, selecting the launcher icons, and moving the selected icons to the folder. This can be a complex process to users not accustomed to portable terminal use.

Accordingly, to solve the above problem, there is a need for an apparatus and method for simplifying a process of entering an edit mode for managing a plurality of launcher icons.

### SUMMARY OF THE INVENTION

An aspect of the present invention is to substantially solve at least the above problems and/or disadvantages and to provide at least the advantages below. Accordingly, one aspect of the present invention is to provide an apparatus and method for simplifying an icon edit process in a portable terminal.

Another aspect of the present invention is to provide an apparatus and method for sensing an edit gesture for an icon and performing an edit mode in a portable terminal.

A further aspect of the present invention is to provide an apparatus and method for sensing an edit gesture for a single icon and performing an icon deletion mode in a portable terminal.

Yet another aspect of the present invention is to provide an apparatus and method for sensing an edit gesture for multiple icons and performing an icon grouping mode in a portable terminal.

The above aspects are achieved by providing an apparatus and method for changing an icon in a portable terminal.

According to one aspect of the present invention, an apparatus for performing an icon edit process in a portable terminal is provided. The apparatus includes an input unit, a gesture analysis unit, a controller, and an edit-mode performance unit. The input unit receives an input of a gesture by a user. After sensing and analyzing the gesture input through the input unit, the gesture analysis unit identifies if the gesture is an edit gesture made on an icon. If the gesture is not the edit gesture made on the icon, the controller performs an operation for the gesture. If the gesture is the edit gesture made on the icon, the edit-mode performance unit performs an edit mode.

According to another aspect of the present invention, a method for performing an icon edit process in a portable terminal is provided. The method includes sensing a gesture by a user, identifying if the sensed gesture is an edit gesture made on an icon, if the sensed gesture is not the edit gesture made on the icon, performing an operation for the gesture, and, if the sensed gesture is the edit gesture made on the icon, entering an edit mode.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram illustrating a construction of a portable terminal for performing an edit mode according to an exemplary embodiment of the present invention;
FIG. 2 is a flowchart illustrating a process of performing the edit mode in the portable terminal according to the exemplary embodiment of the present invention;
FIG. 3 is a flowchart illustrating a process of editing an icon in the portable terminal according to the exemplary embodiment of the present invention;
FIGS. 4A-4E are diagrams illustrating a process of performing an icon deletion mode in the portable terminal according to the exemplary embodiment of the present invention; and
FIGS. 5A-5D are diagrams illustrating a process of performing an icon grouping mode in the portable terminal according to the exemplary embodiment of the present invention.

### DETAILED DESCRIPTION OF THE INVENTION

Preferred embodiments of the present invention will be described herein below with reference to the accompanying drawings, in which like reference numerals refer to like elements throughout. This invention may, however, be embodied in many different forms and should not be construed as limited to the exemplary embodiments set forth herein. In the following description, well-known functions or constructions are not described in detail since they would obscure the invention in unnecessary detail.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among terms set forth herein, data refers to any kind of information processed by the device, including text and/or images received from any external entities, messages transmitted or received, and information created when a specific function is executed by the device.

The present invention provides an apparatus and method for sensing a simple gesture and performing an edit process of deleting an icon, changing an array of icons, or grouping icons in a portable terminal. The following description is made for an apparatus and method which, by sensing an edit gesture for an icon and entering an edit mode, simplify the icon edit process in the portable terminal according to the present invention.

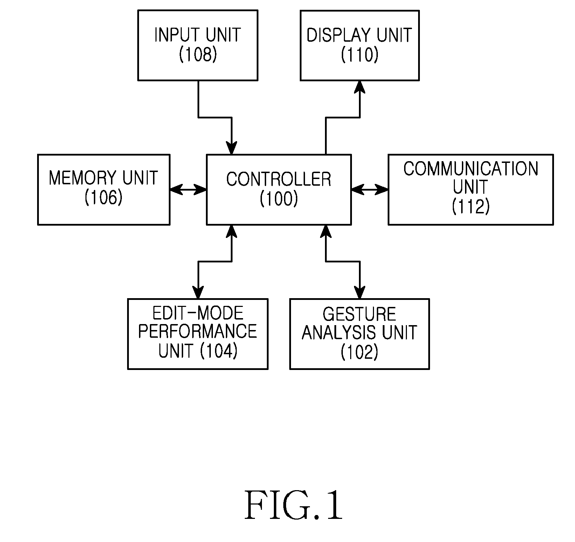

FIG. 1 is a block diagram illustrating a construction of a portable terminal capable of performing an edit mode according to an exemplary embodiment of the present invention.

Referring to FIG. 1, the portable terminal includes a controller 100, a gesture analysis unit 102, an edit-mode performance unit 104, a memory unit 106, an input unit 108, a display unit 110, and a communication unit 112.

The controller 100 of the portable terminal controls the general operation of the portable terminal. For example, the controller 100 performs processing and control for voice call and data communication. In addition to general functions, according to the present invention, the controller 100 processes data or signals from the input unit 108 and/or other information provided to the controller 100 to sense an edit gesture by a user and to perform an edit mode corresponding to the edit gesture.

As used herein, the edit mode refers to a mode of deleting an output icon, changing an array of icons, or grouping icons. The controller 100 can process data or signals from the input unit 108 and/or other information provided to the controller 100 to sense an edit gesture on an icon. That is, with an icon displayed on the display unit 110, the edit gesture is performed by the user, for example, moving a figure or stylo or other user-controlled item along the surface of a portion of a screen of the display unit 110, with the portion of the screen displaying the selected icon. The controller then performs the edit mode corresponding to the edit gesture, which may thus include deleting an output icon, changing an array of icons, or grouping icons.

The gesture analysis unit 102 analyzes an edit gesture for edit mode performance under the control of the controller 100.

In operation, the gesture analysis unit 102 analyzes an edit gesture sensed on an icon, determines a request for edit mode performance, and provides this request to the controller 100. For example, in the case of sensing an edit gesture on a single icon, the gesture analysis unit 102 determines a request for entry into a mode of deleting an icon or changing an array of icons and, in the case of sensing an edit gesture on multiple icons, the gesture analysis unit 102 determines a request for entry into a mode of grouping icons.

Examples of gestures generally recognized by the gesture analysis unit 102 are given as in Table 1 below.

**Table 1**

| Touch gesture | Definition | Pre-applied action |
|---|---|---|
| Tap | Action of once pressing and non-pressing touch area with finger | Selecting button or item and the like |
| Drag | Action of moving while pressing touch area with finger | Panning or scrolling |
| Swipe | Action of briefly moving finger from right to left or from top to bottom | Deleting specific item from list |
| Pinch Open | Action of pinching two fingers apart on touch area | Zoom-in |
| Pinch Close | Action of pinching two fingers together on touch area | Zoom-out |
| Double Tap | Action of tapping twice quickly | Image zoom-in/out |
| Touch & Hold | Action of touching with finger and holding for constant or minimum time | Magnifier UI exposure in editor box Deleting icon from main menu |

An edit gesture according to the present invention can be defined as in Table 2 below.

**Table 2**

| Touch gesture | Definition | Applied action |
|---|---|---|
| Scrub (rubbing) | Action of moving finger continuously without | Made on single icon → deletion mode entry |
| | consistent directionality for constant or minimum time | Made on multiple icons → grouping mode entry |

Further, the edit gesture is not restricted to a 'Scrub' gesture, and can be a gesture of drawing a shape of a specific figure (e.g., a circle, a square, a star and the like) according to another exemplary embodiment of the present invention.

The edit-mode performance unit 104 performs an edit mode according to the analysis result of the gesture analysis unit 102. If a request for entry into a mode of deleting an icon or changing an array of icons is determined by the gesture analysis unit 102, the edit-mode performance unit 104 performs an edit mode capable of deleting an icon or changing an array of icons.

In addition, the edit-mode performance unit 104 can provide a menu allowing a user to enter an input capable of ending a process being currently executed.

Further, if a request for entry into a mode of grouping icons is determined by the gesture analysis unit 102, the edit-mode performance unit 104 proceeds to group selected icons.

In the process of grouping selected icons, the edit-mode performance unit 104 can determine the association of the selected icons and use the association as newly created group information (e.g., a group name, a group image, a group icon color and the like).

The memory unit 106 is composed of a Read Only Memory (ROM), a Random Access Memory (RAM), a flash ROM, and/or other known memory devices as well as combinations of such devices. The ROM and/or other permanent memory components of the memory unit 106 stores a microcode of a program for processing and controlling the controller 100, the gesture analysis unit 102, the edit-mode performance unit 104, and a variety of reference data.

The RAM and/or other temporary memory components of the memory unit 106 act as a working memory of the controller 100, and stores temporary data generated in execution of a variety of programs. The flash ROM and/or other removable media components of the memory unit 106 store a diversity of updateable depository data such as a phone book, an outgoing message, and an incoming message. According to an exemplary embodiment of the present invention, the flash ROM stores information on an edit gesture and information on an edit mode corresponding to the gesture.

The method described hereunder of the present invention may be provided as one or more instructions in one or more software modules stored in the memory unit 106. The software modules may be executed by the controller 100.

The input unit 108 includes numeral key buttons '0' to '9' and/or other known numerical symbols, a menu button, a cancel button, an OK button, a talk button, an end button, an Internet button, navigation key (or direction key) buttons, and a plurality of function keys such as a character input key. The input unit 108 provides key input data corresponding to a key pressed by a user to the controller 100. According to the present invention, the input unit 108 receives an input of a user's gesture for edit mode performance.

The display unit 110 displays state information generated during operation of the portable terminal, a large amount of moving pictures and still pictures and the like. The display unit 110 may be a color Liquid Crystal Display (LCD), an Active Matrix Organic Light Emitting Diode (AMOLED), other known types of display devices and the like. The display unit 110 includes a touch input device and, accordingly, may be connected to the input unit 108. Alternatively, the display unit 110 may include or be included in the input unit 108 to provide the touch input device. When being applied to a portable terminal which uses a touch input scheme, the display unit 110 can be used as an input device of the portable terminal. Further, the display unit 110 outputs a screen with displayed information, icons, and objects for operating an edit mode performed through an edit gesture according to the present invention.

The communication unit 112 performs a function of transmitting/receiving and processing a wireless signal for data input/output operations through an antenna (not shown). For example, during transmission, the communication unit 112 performs a function of processing original data through channel coding and spreading, converting the original data into a Radio Frequency (RF) signal, and transmitting the RF signal. During reception, the communication unit 112 performs a function of converting a received RF signal into a baseband signal, processing the baseband signal through de-spreading and channel decoding, and restoring the signal to retrieve the original data.

In alternative embodiments, the functions and operations of the gesture analysis unit 102 and the edit-mode performance unit 104 can be implemented by the controller 100 of the portable terminal. However, in the exemplary embodiment of the present invention described herein, the controller 100, the gesture analysis unit 102, and the edit-mode performance unit 104 are separately constructed and shown as an exemplary construction in FIG. 1 for convenience of description herein, and so the description herein of such components 100, 102, 104 as separate devices is not intended to limit the scope of the present invention. It will be understood by those skilled in the art that various modifications of construction can be made within the scope of the present invention. For example, construction and implementation of the present invention may be such that all of the functions and operations of the gesture analysis unit 102 and the edit-mode performance unit 104 are processed in the controller 100.

According to the present invention, for example, an electronic device comprising one or more controller, a touch screen, a memory and one or software modules stored in the memory unit configured for execution by the controller, the software modules comprising one or more instruction to perform methods described hereunder.

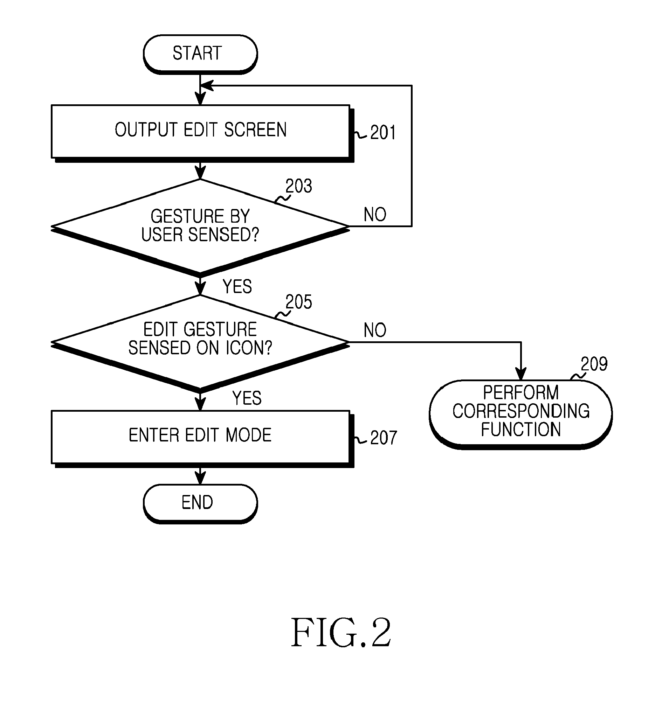

FIG. 2 is a flowchart illustrating a process of performing an edit mode in the portable terminal according to the exemplary embodiment of the present invention.

Referring to FIG. 2, in step 201, the portable terminal outputs an edit screen. Herein, an edit mode refers to a mode of deleting an icon output on a screen, changing an array of icons, or grouping icons. The edit screen can be a wait screen or other types of screens, such as pages of screens, outputting a plurality of icon items.

After step 201, the portable terminal proceeds to step 203 and identifies if the portable terminal senses a gesture by a user. Herein, a gesture refers to a user's touch input implemented on a screen and/or an input device, such as the input unit 108 and/or the display unit 110 having a touch input function, to perform a specific function. The portable terminal can sense a gesture through a touch screen panel. Further, the gesture includes 'Tap' (action of once pressing and non-pressing a touch area with finger), 'Drag' (action of moving while pressing a touch area with a finger), 'Swipe' (action of briefly moving a finger, for example, from right to left or from top to bottom of the screen), 'Pinch Open' (action of pinching two fingers apart on a touch area), 'Pinch Close' (action of pinching two fingers together on a touch area), 'Double Tap' (action of tapping the screen twice quickly), and 'Touch and Hold' (action of touching with a finger and holding for a constant or a predetermined minimum time). According to the exemplary embodiment of the present invention, the gesture can include 'Scrub' (action of moving a finger continuously without consistent directionality for a constant or a predetermined minimum time). Herein, the 'Scrub' gesture can be used as an edit gesture according to the exemplary embodiment of the present invention. The edit gesture can be not only the 'Scrub' gesture but also a gesture of drawing a shape of a specific figure (e.g., a circle, a square, a star and the like) and the like.

If the portable terminal identifies in step 203 that the gesture by the user is not sensed, the portable terminal again performs step 201 in order to sense a gesture by the user.

However, if the portable terminal identifies in step 203 that the gesture by the user is sensed, the portable terminal performs step 205 and identifies if an edit gesture is sensed on an output icon. Herein, the edit gesture refers to a gesture of editing an array of output icons, deleting an icon, or grouping icons.

If the portable terminal identifies in step 205 that the edit gesture is not sensed on the icon, the portable terminal proceeds to step 209 and performs a corresponding function (i.e., an operation corresponding to the gesture). That is, the case that the edit gesture is not sensed on the icon can be a situation in which a gesture, except the 'Scrub' gesture among the acceptable gestures, is sensed.

However, if the portable terminal identifies in step 205 that the edit gesture is sensed on the icon, the portable terminal proceeds to step 207 and performs an edit mode corresponding to the edit gesture. Herein, the edit mode can be a mode of changing an array of output icons, deleting an icon, or grouping icons.

After performing the edit mode corresponding to the edit gesture, the portable terminal terminates the process in FIG. 2 according to the exemplary embodiment of the present invention.

The method performed according to FIG. 2 may be provided as one or more instructions in one or more software modules stored in the storage unit. In that case, the software modules may be executed by the controller 100.

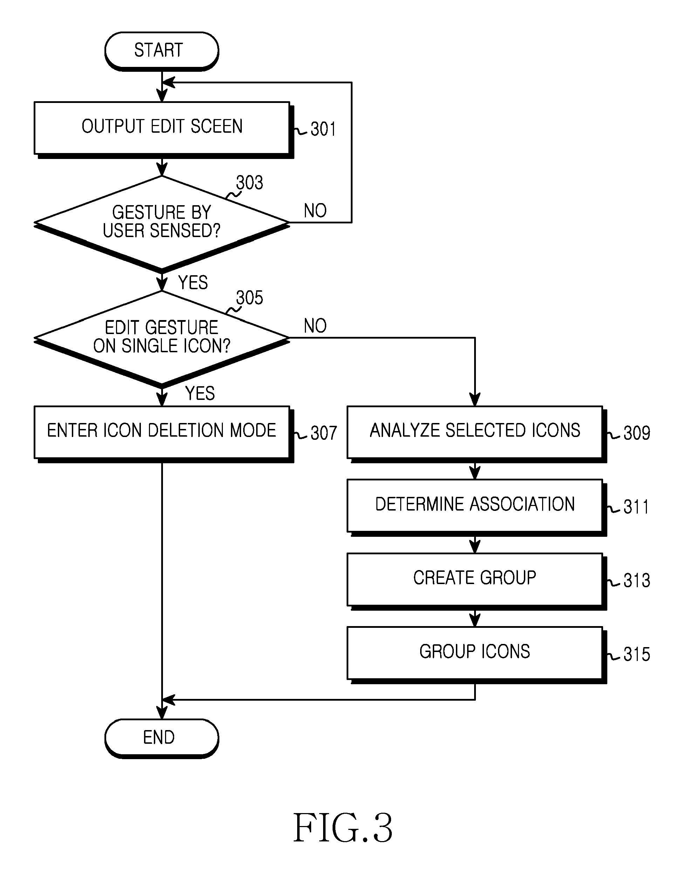

FIG. 3 is a flowchart illustrating a process of editing an icon in a portable terminal for performing step 207 in FIG. 2, according to the exemplary embodiment of the present invention.

Referring to FIG. 3, in step 301, the portable terminal performs a process of outputting an edit screen. Herein, an edit mode refers to a mode of deleting an icon output on a screen, changing an array of icons, or grouping icons. The edit screen can be a screen outputting an icon item.

Also, in steps 303-315, described in greater detail herein, the portable terminal can sense a gesture made when an icon is touched, and performs a mode of deleting an output icon, changing an array of icons, or grouping icons according to the exemplary embodiment of the present invention.

For example, in the case where the portable terminal senses a gesture with a single icon touched, the portable terminal can enter a mode of changing an array of icons or deleting an icon.

Herein, the gesture of entering the mode of changing the array of icons or deleting the icon can be a gesture of scrubbing a single icon, i.e., an action of moving a finger continuously without consistent directionality for a constant or predetermined minimum time.

Further, the gesture of entering the mode of changing the array of icons or deleting the icon can be a gesture of scrubbing after holding a touch on a single icon for a constant time.

Further, the gesture of entering the mode of changing the array of icons or deleting the icon can be a gesture of scrubbing an area, except for a single icon, in response to a touch on the single held icon.

Also, in the case where the portable terminal senses a gesture with two icons touched, the portable terminal can enter a mode of grouping icons.

Herein, the gesture of entering the mode of grouping the icons can be a gesture of scrubbing two icons.

Further, the gesture of entering the mode of grouping the icons can be a gesture of scrubbing after holding a touch on two icons for a constant or predetermined minimum time.

Further, the gesture of entering the mode of grouping the icons can be a gesture of scrubbing an area except for at least two icons with a touch on the at least two held icons.

In the exemplary embodiment described herein, the present invention defines herein, as an edit gesture, a gesture of entering a mode of deleting an icon output on a screen, changing an array of icons, or grouping icons as described above and herein. The edit gesture can include not only the 'Scrub' gesture but also a gesture of drawing a shape of a specific figure (e.g., a circle, a square, a star and the like) and the like.

Referring to FIG. 3, after the portable terminal outputs an edit screen in step 301, the portable terminal proceeds to step 303 and identifies if the portable terminal senses or has sensed a gesture by a user.

If the portable terminal identifies in step 303 that the gesture by the user is not sensed, the portable terminal again performs the process of step 301 so as to sense a gesture by the user.

However, if the portable terminal identifies in step 303 that the gesture by the user is sensed, the portable terminal proceeds to step 305 and identifies if an edit gesture for a single icon is sensed.

If the portable terminal identifies in step 305 that the edit gesture for the single icon is sensed, the portable terminal proceeds to step 307 and performs processes to enter an icon deletion mode for deleting an icon output on a screen. Herein, the deletion mode includes a mode for changing an array of icons output on the screen. After performing step 307, the portable terminal ends the process.

However, if the portable terminal identifies in step 305 that an edit gesture for multiple icons is sensed, the portable terminal performs a process of grouping icons output on the screen.

The process of grouping the icons output on the screen is described in detail herein. The portable terminal proceeds to step 309 and analyzes multiple icons selected by a user. The portable terminal then proceeds to step 311 and determines the association of the multiple icons. Herein, the selected multiple icons refer to icons on which edit gestures are made.

After step 311, the portable terminal proceeds to step 313 and creates a group using the determined association of multiple icons from step 311. The portable terminal then proceeds to step 315 and performs a process of grouping the selected multiple icons. In step 315, the portable terminal can automatically set a group name, a group image, a group folder color and the like using the determined association of multiple icons from step 311.

After completing step 315, the portable terminal terminates the process in FIG. 3 according to the exemplary embodiment of the present invention.

The method performed according to FIG. 3 may be provided as one or more instructions in one or more software modules stored in the storage unit. In that case, the software modules may be executed by the controller 100.

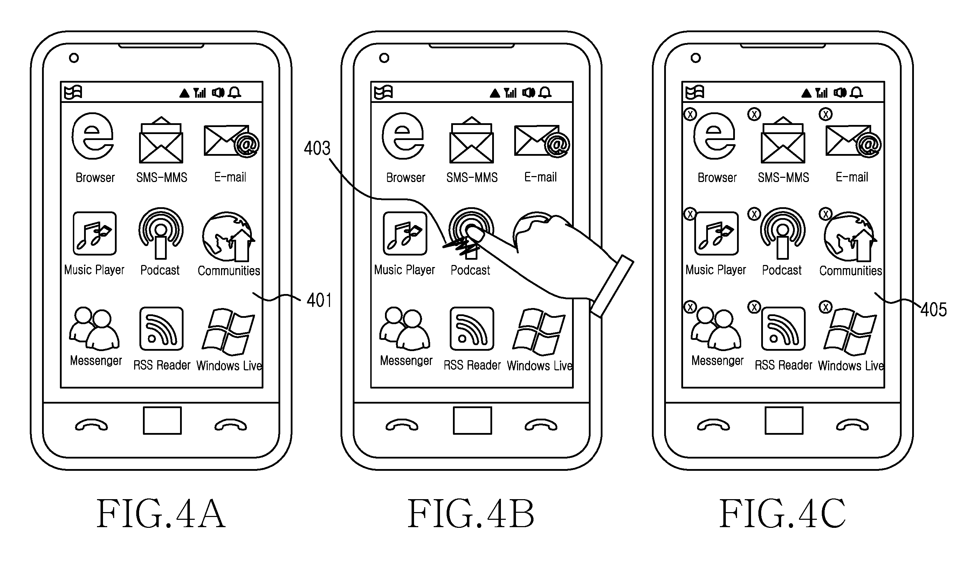

FIGS. 4A-4E are diagrams illustrating a process of performing an icon deletion mode in a portable terminal performing step 307 in FIG. 3, according to the exemplary embodiment of the present invention.

Referring to FIG. 4A, the portable terminal outputs an edit screen 401. Herein, the edit screen refers to a screen on which a plurality of icon information is output.

Further, one or more of the icons output on the edit screen 401 can be an icon of an application installed in the portable terminal, an icon of data stored through a bookmark function and the like.

Generally, in the case where a user of a portable terminal will change an array of pre-installed or pre-output icons, or deletes an icon, the user using a prior art portable terminal must manually perform a process of selecting an edit item after pressing a key, which may be a hardware key of the portable terminal, or may be another symbol or icon on the screen.

This can be a complex process to users not accustomed to portable terminal use.

However, the portable terminal according to the present invention can recognize a simple gesture for performing an icon deletion mode.

That is, in the case where a user of the portable terminal intends to change an array of pre-installed or pre-output icons or to delete an icon, as illustrated by the gestures shown in FIG. 4B, the user just makes an edit gesture such as a 'Scrub' gesture, represented by the zigzag motion 403 on the screen, after selecting an output icon. In the exemplary embodiment shown in FIG. 4B, the zigzag motion 403 may be performed over the selected icon, such as the Podcast icon shown in the screen of FIG. 4B, to be the edit gesture. However, it is understood that, in alternative embodiments, the zigzag motion 403 may be performed anywhere on the screen in FIG. 4B, and so the present invention does not require that the zigzag motion 403 be over the selected icon, such as the Podcast icon shown in the screen of FIG. 4B.

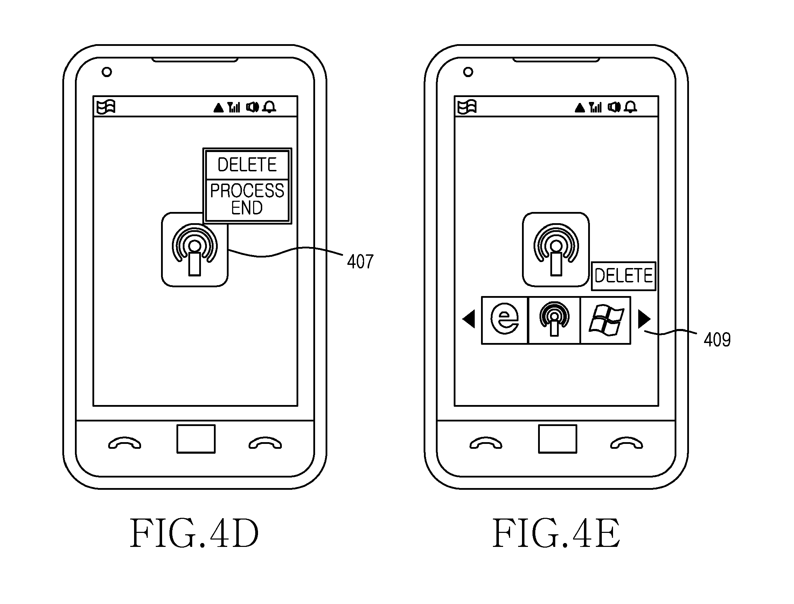

In response to the input edit gesture, such as the zigzag motion 403 in FIG. 4B, the portable terminal performs the icon deletion mode for deleting an icon by generating a deletion screen 405, as shown in FIG. 4C, in which deletion marks such as an X in a circle are displayed substantially adjacent to at least one, or even all, of the icons on the screen 405, allowing a user to select one or more icons for deletion by tapping the associated X symbols on the screen 405. The user can select a delete mark associated with each icon, for choosing to delete the selected icon, with the deletion performed automatically by the portable terminal, or alternatively, with the portable terminal prompting additional user inputs using the screens shown in FIGS. 4D-4E.

Further, the user may change an array of icons after selecting an icon in the icon deletion mode.

Also, as illustrated in FIG. 4D, the portable terminal can output and display a deletion menu for enabling the user to delete an icon 407 on which an edit gesture is sensed, or end a process currently being executed, with the process corresponding to the icon on which the edit gesture is sensed.

At this time, the portable terminal may output a deletion menu including a delete selection and a process end selection after floating the selected icon 407 on which the edit gesture is sensed in a new window on the screen of the portable terminal. The deletion menu may be displayed anywhere on the screen. In the exemplary embodiment shown in FIG. 4D, the deletion menu having the options Delete and Process End, as the delete selection and process end selection, respectively, may be displayed substantially adjacent to the icon 407 to be deleted. In the exemplary embodiment shown in FIG. 4D, substantially all of the icons from FIGS. 4A-4C may be removed from the screen, to provide a Delete Icon screen in FIG. 4D in which only the selected icon 407 is displayed along with the deletion menu.

In alternative embodiments, the deletion menu showing the options Delete and Process End may be displayed on the screen shown in FIG. 4C, with the deletion menu substantially adjacent to the selected icon, such as the Podcast Icon.

Also, as illustrated in FIG. 4E, the portable terminal can output a menu 409 for enabling the user to delete an icon on which an edit gesture is sensed or end a process being currently executed. The selected icon is displayed substantially adjacent to the Delete selection, and with this screen configuration, deletion is performed when the user presses or taps the Delete selection.

At this time, the portable terminal can also enable the user to select a process being currently executed to be ended, with such currently executed processes represented by associated icons in the menu 409, and with the menu 409 centering initially on the icon on which the edit gesture is sensed. In the exemplary embodiment shown in FIG. 4E, the initially centered icon is the Podcast icon, which is the selected icon for deletion or for ending its execution. Using the menu 409 and arrow icons, a user tapping the arrow icons may scroll through the processes, with each tap of the arrow icons moving different process icons sideways on the screen to be located in the center of the menu 409. Once the user decides which process to stop executing, the user positions the icon in the center of the menu 409, and pressing or tapping the center icon will cause the process corresponding to the centered icon to stop executing.

The method performed according to FIG. 4A through 4E may be provided as one or more instructions in one or more software modules stored in the storage unit. In that case, the software modules may be executed by the controller 100.

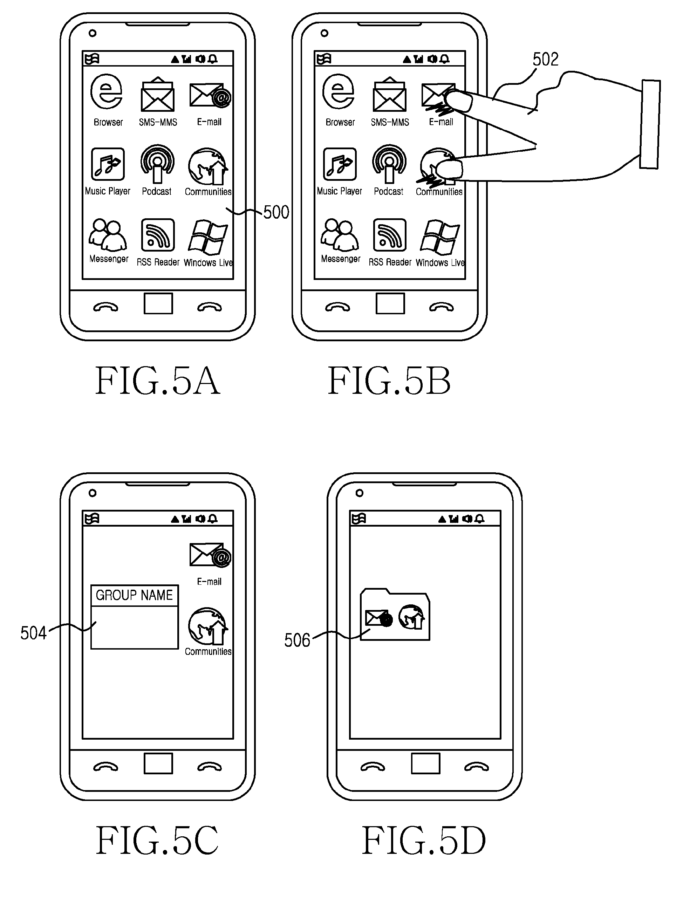

FIGS. 5A-5D are diagrams illustrating a process of performing an icon grouping mode in a portable terminal, for performing steps 309-315 in FIG. 3, according to the exemplary embodiment of the present invention.

Referring to FIG. 5A, the portable terminal outputs an edit screen 500. Herein, the edit screen refers to a screen on which a plurality of icon information is output.

Further, icons output on the edit screen can be an icon of an application installed in the portable terminal, an icon of data stored through a bookmark function and the like.

Generally, in a case where a user of a portable terminal will group pre-installed or pre-output icons, the user of a prior art portable terminal must manually perform a process of selecting an edit item after pressing a key, which may be a hardware key of the portable terminal, or may be another symbol or icon on the screen of the portable terminal.

This can be a complex process to users not accustomed to portable terminal use.

However, the portable terminal according to the present invention can recognize a simple gesture for performing an icon grouping mode.

That is, in the case where a user of the portable terminal intends to group pre-output icons, as illustrated in FIG. 5B, the user just makes an edit gesture 502 using the user's fingers, such as a 'Scrub' gesture after selecting icons to be grouped among the output icons on the screen in FIG. 5B. In the exemplary embodiment shown in FIG. 5B, the user has selected the E-mail and the Communities icons.

Through this processing of the edit gesture 502 by the portable terminal, as illustrated in FIG. 5C, the portable terminal performs a mode of grouping the selected icons and creates a group.

At this time, the portable terminal can analyze the association of the grouped icons and automatically set a name of a group to be newly created, an image of the group, a background of the group, a folder color of the group and the like.

As shown in the exemplary embodiment in FIG. 5C, the group is represented by a group icon 504 having a group name, which may be initially labeled "Group Name" and which may be changed by the user. As shown in FIG. 5C, the portable terminal may clear the screen of all icons except for the selected icons, or alternatively may generated a pop-up screen with such selected icons. In another alternative embodiment, the selected icons may be displayed to float in a new window shown in FIG. 5C over the screen shown in FIG. 5B.

After that, as illustrated in FIG. 5D, the portable terminal groups the icons selected by the user into the group, which is represented on the screen by a group folder icon 506 having smaller versions of the selected icons within the group folder icon 506, such that the group folder icon 506 and smaller icons represent the association of the selected icons within the group.

The above description is made for a process of editing an icon using an edit gesture, but the present invention is applicable to using and editing a data list screen.

For example, the present invention can apply an edit gesture to a screen of a photo album list, a phone number list, a memo list and the like, enabling a portable terminal sensing the edit gesture on the list to enter a list edit mode (e.g., list sending, list deleting, list sharing and the like).

As described above, the present invention relates to simplifying an icon edit process in a portable terminal. By sensing an edit gesture for an icon and entering an edit mode, the portable terminal can enable a user to simply perform the edit mode.

The method performed according to FIG. 5A through 5D may be provided as one or more instructions in one or more software modules stored in the storage unit. In that case, the software modules may be executed by the controller 100.

The above-described apparatus and methods according to the present invention can be implemented in hardware, firmware or as software or computer code that can be stored in a recording medium such as a CD ROM, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain preferred embodiments thereof, it will be understood by those skilled in the art that various changes in form and details may be made therein without departing from the spirit and scope of the invention as defined by the appended claims.

## Claims

1. An apparatus for performing an icon edit process in a portable terminal, the apparatus comprising:
an input unit for receiving input of a gesture;
a gesture analysis unit for sensing and analyzing the gesture input through the input unit, and for identifying if the sensed gesture is an edit gesture made on an icon displayed on a display unit;
a controller, responsive to the sensed gesture being identified as not the edit gesture made on the icon, for performing an operation corresponding to the sensed gesture; and
an edit-mode performance unit, responsive to the sensed gesture being identified as the edit gesture made on the icon, for performing an edit mode of the icon edit process.

2. The apparatus of claim 1, wherein the gesture analysis unit identifies if the edit gesture is a first gesture made on a single icon or a second gesture made on multiple icons.

3. The apparatus of claim 1, wherein, if the edit gesture is made on the icon as a single selected icon, the edit-mode performance unit performs a mode of deleting the selected icon, and
the mode of deleting the selected icon comprises a mode of changing an array of icons.

4. The apparatus of claim 3, wherein, after performing the mode of deleting the selected icon, the edit-mode performance unit performs a mode of ending a process being executed.

5. The apparatus of claim 1, wherein, if the edit gesture is made on multiple icons, the edit-mode performance unit performs a mode of grouping the multiple icons.

6. The apparatus of claim 5, wherein the edit-mode performance unit analyzes the multiple icons on which the edit gesture is made, determines the association of the multiple icons, and uses the determined association as group creation information for grouping the multiple icons.

7. The apparatus of claim 1, wherein the edit gesture comprises at least one of a gesture of moving a touching input to the input unit with such movement performed continuously without consistent directionality for at least a constant time as a scrubbing gesture, and a gesture of drawing a shape of a specific figure on the input unit.

8. A method for performing an icon edit process in a portable terminal, the method comprising:
sensing a gesture;
identifying if the sensed gesture is an edit gesture made on an icon;
if the sensed gesture is not the edit gesture made on the icon, performing an operation corresponding to the gesture; and
if the sensed gesture is the edit gesture made on the icon, entering an edit mode for performing the icon edit process.

9. The method of claim 8, wherein identifying if the sensed gesture is the edit gesture made on the icon comprises:
identifying if the edit gesture is a first gesture made on a single selected icon; and
identifying if the edit gesture is a second gesture made on multiple icons.

10. The method of claim 8, wherein entering the edit mode comprises detecting if the edit gesture is made on a single selected icon, and entering a mode of deleting the selected icon,
the mode of deleting the selected icon comprising changing an array of icons.

11. The method of claim 10, wherein entering the edit mode comprises ending a process being executed after performing the mode of deleting the selected icon.

12. The method of claim 8, wherein entering the edit mode comprises detecting if the edit gesture is made on multiple icons, and entering a mode of grouping the multiple icons.

13. The method of claim 12, wherein entering the mode of grouping the multiple icons comprises:
analyzing the multiple icons on which the edit gesture is made and determining the association of the multiple icons; and
using the determined association as group creation information for grouping the multiple icons.

14. The method of claim 8, wherein the edit gesture comprises at least one of a gesture of moving a touching input with such movement performed continuously without consistent directionality for at least a constant time as a scrubbing gesture, and a gesture of drawing a shape of a specific figure on the input unit.
